# FASCICULE DE BREVET EUROPEEN

(11) **EP 3 370 951 B1**
(45) Date de publication et mention de la délivrance du brevet: **01.01.2020**
(21) Numéro de dépôt: 16809128.8
(22) Date de dépôt: 03.11.2016
(51) Int. Cl.: B29D 99/00, B29C 70/22, B29C 70/48, F01D 5/28, B29L 31/00, B29L 31/08, C04B 35/563, C04B 35/571, C04B 35/628, C04B 35/80, C04B 35/83

(54) **PROCEDE DE FABRICATION D'UNE PIECE EN MATERIAU COMPOSITE COMPRENANT UN CORPS SOLIDAIRE D'UNE OU PLUSIEURS PLATES-FORMES**
VERFAHREN ZUR HERSTELLUNG EINES BAUTEILS AUS EINEM VERBUNDWERKSTOFF MIT EINEM KÖRPER MIT EINER ODER MEHREREN PLATTFORMEN
METHOD FOR MANUFACTURING A COMPONENT MADE OF COMPOSITE MATERIAL COMPRISING A BODY INTEGRAL WITH ONE OR MORE PLATFORMS

(30) Priorité: 06.11.2015 FR 1560649
(43) Date de publication de la demande: 12.09.2018
(73) Titulaire: SAFRAN, 75015 Paris (FR)
(72) Inventeur: LANFANT, Nicolas Pierre, 77550 MOISSY-CRAMAYEL (FR); PAUTARD, Sébastien, 91120 Palaiseau (FR)
(74) Mandataire: Cabinet Beau de Loménie
(86) Numéro de dépôt international: PCT/FR2016/052848
(87) Numéro de publication internationale: WO 2017/077240

(56) Documents cités:
- WO-A1-2013/079860

## Description

### Arrière-plan de l'invention

L'invention se rapporte aux pièces en matériau composite comprenant un corps solidaire d'au moins une plate-forme présente à une de ses extrémités. De tels pièces concernent notamment, mais non exclusivement, les aubes de turbomachines à plates-formes intérieure et/ou extérieure intégrées pour distributeur de turbine ou redresseur de compresseur.

Le document WO 2013/079860 décrit la réalisation d'une aube de turbomachine en matériau composite à plates-formes intérieure et extérieure intégrées.

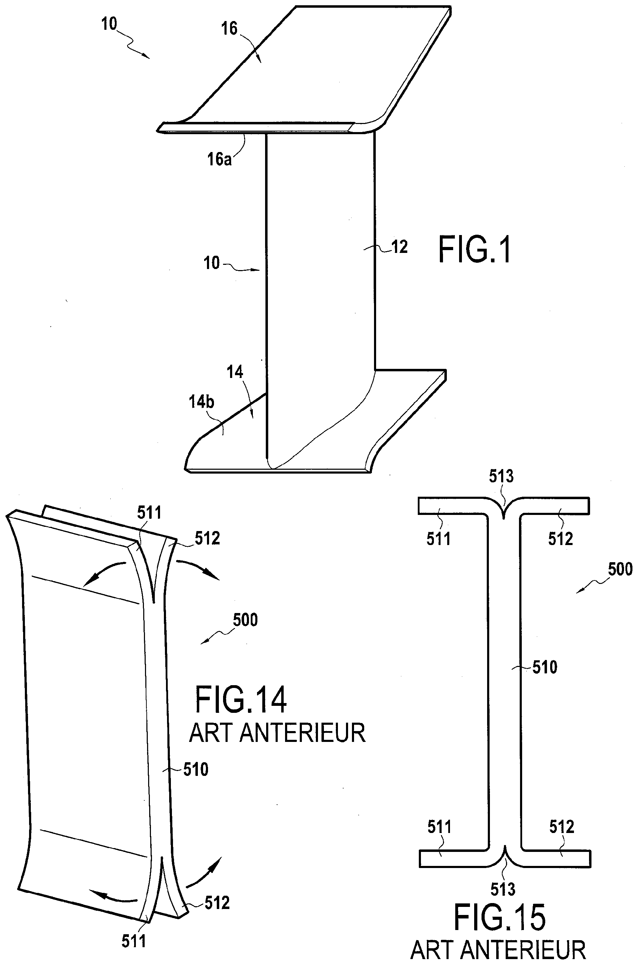

Comme illustré sur la figure 14, une aube à plates-formes intérieure et extérieure intégrées est réalisée à partir d'une ébauche fibreuse 500 obtenue par tissage tridimensionnel (3D) ou multicouche par exemple de fils de fibres en carbure de silicium ou fibres de carbone. L'ébauche 500 comprend une partie 510 destinée à former la pale de l'aube et dans laquelle toutes les couches de fils sont liées entre elles. L'ébauche fibreuse est en outre déliée en deux parties 511 et 512 à chacune de ses extrémités. Les plates-formes interne et externe peuvent être réalisées en déployant les parties 511 et 512 perpendiculairement à la partie 510 destinée à former la pale de l'aube comme illustré sur la figure 15. La préforme ainsi obtenue est ensuite densifiée de façon connue avec une matrice par exemple en céramique, en oxyde ou organique (thermoplastique, thermodurcissable, ...).

Une fois les parties 511 et 512 déployées, une rainure ou creux 513 apparait entre les deux parties déployées 511 et 512. Si elle n'est pas comblée, la rainure 513 peut créer une zone de faiblesse pouvant entraîner la rupture des fibres lorsque la pièce est sollicitée mécaniquement. Cette rainure peut être comblée à l'aide d'un élément de comblement rapporté qui peut comprendre de la résine seule ou une armature fibreuse (tresse, mèche, etc.) imprégnée de résine.

Cependant, si cette solution de comblement permet d'améliorer la résistance mécanique de l'aube dans la zone de séparation entre les deux parties de plate-forme, elle présente toutefois encore certains inconvénients. En effet, l'ajout d'un élément de comblement rapporté complexifie la fabrication de la pièce puisqu'il rajoute des opérations supplémentaires à celles de la fabrication de pièce proprement dite (opérations secondaires pour le formage et l'insertion de l'élément de comblement sur la pièce à fabriquer). Ceci se traduit par un cout de fabrication de la pièce plus élevé. En outre, si l'ajout d'un tel élément de comblement permet d'améliorer la tenue en compression de la pièce, la tenue en traction reste cependant problématique car les rayons présentés par les parties de plate-forme à leur jonction avec la partie de pale de l'aube se déforment sous les sollicitations en traction, ce qui peut conduire à des décohésions et à un détachement de l'élément de comblement du reste de l'aube.

### Objet et résumé de l'invention

L'invention a, par conséquent, pour but de fournir un procédé simplifié de fabrication d'une pièce en matériau composite à plate-forme(s) intégrée(s) qui présente une bonne tenue à la fois en compression et en traction.

A cet effet, selon l'invention, il est proposé un procédé de fabrication d'une pièce en matériau composite ayant un corps solidaire d'au moins une plate-forme présente à une extrémité dudit corps, le procédé comportant :
- la formation par tissage multicouches entre une pluralité de couches de fils de chaîne d'une ébauche fibreuse ayant une direction longitudinale correspondant à celle du corps de la pièce à réaliser, l'ébauche fibreuse étant séparée dans son épaisseur en des première, deuxième et troisième parties dans au moins une zone de déliaison voisine d'une de ses extrémités, la première partie étant située entre la deuxième partie et la troisième partie auxquelles elle est reliée par tissage en dehors de ladite au moins une zone de déliaison,
- la formation, à partir de l'ébauche fibreuse, d'une préforme de la pièce réaliser, par dépliage, de part et d'autre de la première partie, de segments de la deuxième partie et de la troisième partie non liés à la première partie, par mise en forme du segment déplié de la deuxième partie et du segment déplié de la troisième partie pour former des parties de préforme pour une plate-forme de la pièce à fabriquer, et par rabattage sur lui-même du segment de la première partie pour combler la rainure présente au niveau de la portion de séparation entre les deuxième et troisième parties,
- la densification de la préforme par une matrice pour obtenir une pièce en matériau composite ayant au moins une plate-forme intégrée.

Avec le procédé de l'invention, la rainure présente entre les parties dépliées de l'ébauche fibreuse destinée à former la plate-forme est comblée avec une texture fibreuse provenant directement de l'ébauche et rattachée à celle-ci, ce qui permet d'éviter l'ajout d'un élément de comblement rapporté. Le procédé de fabrication de la pièce est ainsi simplifié tandis que la tenue en traction et compression de la pièce est améliorée, l'élément étant lié au corps de pièce par des fibres et non plus seulement par la matrice.

Par ailleurs, avec le procédé de l'invention, le nombre d'opérations nécessaires pour combler la rainure présente au niveau de la portion de séparation entre les deuxième et troisième parties est réduit par rapport à la solution de l'art antérieur consistant à rapporter un élément de comblement. Le procédé de l'invention apporte, par conséquent, un gain économique dans la fabrication de la pièce en matériau composite.

Selon un mode particulier de réalisation, les première, deuxième et troisième parties comprennent ensemble le même nombre de couches de fils de chaîne que le reste de l'ébauche fibreuse située en dehors de ladite au moins une zone de déliaison. Ce mode de réalisation présente un avantage économique par sa simplicité de fabrication qui ne nécessite pas d'introduction de fils supplémentaires dans les différentes parties de la pièce.

Selon un autre mode particulier de réalisation, les première, deuxième et troisième parties comprennent ensemble un nombre de couches de fils de chaîne supérieur au nombre de couche de fils de chaîne présents dans le reste de l'ébauche fibreuse située en dehors de ladite au moins une zone de déliaison. Dans ce cas, une ou plusieurs couches de fils de chaîne supplémentaires peuvent être tissées avec les couches de fils de chaîne d'au moins les deuxième et troisième parties. Ce mode de réalisation permet d'épaissir certaines parties de la pièce, par exemple des plateformes, par lesquelles peuvent alors transiter des efforts importants.

Selon encore un autre mode particulier de réalisation, les première, deuxième et troisième parties comprennent ensemble un nombre de couches de fils de chaîne inférieur au nombre de couches fils de chaîne présents dans le reste de l'ébauche fibreuse située en dehors de ladite au moins une zone de déliaison. Dans ce cas, une ou plusieurs couches de fils de chaîne sont retirées lors du tissage desdites au moins deuxième et troisième parties. Ce mode de réalisation permet d'amincir des parties de pièces non structurales ou dans lesquelles les efforts sont faibles afin de faciliter l'intégration de la pièce en allégeant sa masse globale.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective d'une aube de turbomachine ;
- la figure 2 est une vue schématique en plan d'une ébauche fibreuse tissée destinée à la réalisation d'une préforme fibreuse pour une aube du type de celle de la figure 1 ;
- la figure 3 est une vue latérale de l'ébauche de la figure 2 ;
- la figure 4 est une vue schématique en coupe selon le plan IV- IV de la figure 2 ;
- les figures 5 et 6 sont des vues schématiques à échelle agrandie de plans de tissage de l'ébauche de la figure 2 vue en coupe selon les plans V-V et VI-VI de la figure 2 ;
- les figures 7 à 9 sont des vues schématiques montrant des étapes de la réalisation d'une préforme d'aube à partir de l'ébauche fibreuse des figures 2 à 6 ;
- la figure 10 est une vue latérale partielle d'un autre mode de réalisation d'une ébauche fibreuse tissée destinée à la réalisation d'une préforme fibreuse pour une aube du type de celle de la figure 1 ;
- la figure 11 est une vue schématique à échelle agrandie de plans de tissage de l'ébauche de la figure 10 ;
- la figure 12 est une vue latérale partielle d'un autre mode de réalisation d'une ébauche fibreuse tissée destinée à la réalisation d'une préforme fibreuse pour une aube du type de celle de la figure 1 ;
- la figure 13 est une vue schématique à échelle agrandie de plans de tissage de l'ébauche de la figure 12 ;
- la figure 14 est une vue schématique en perspective d'une ébauche fibreuse destinée à la réalisation d'une préforme fibreuse pour une aube selon l'art antérieur ;
- la figure 15 est une vue latérale de l'ébauche fibreuse de la figure 14 après déploiement des parties de l'ébauche destinées à former des plates-formes intérieur et extérieur.

### Description détaillée de modes de réalisation

La figure 1 montre très schématiquement une aube 10, par exemple une aube fixe directrice de sortie (OGV pour « *Outlet Guide Vane* ») d'un redresseur de flux secondaire d'une turbomachine aéronautique. L'aube 10 comprend une pale 12 et des plates-formes intérieure 14 et extérieure 16.

Dans tout le texte, les termes "intérieur" et "extérieur" sont utilisés en référence à la position radiale par rapport à l'axe de la turbomachine.

La face extérieure 14b de la plate-forme 14 et la face intérieure 16a de la plate-forme 16 sont destinées à délimiter la veine d'écoulement de gaz dans la turbine après montage de l'aube 10 dans un carter de turbine.

La pale 12 s'étend entre les plates-formes 14 et 16, dont elle est solidaire. Dans l'exemple illustré, les plates-formes 14, 16 s'étendent entre leurs extrémités amont et aval suivant des directions générales qui forment des angles non nuls par rapport à un plan normal à la direction longitudinale de la pale 12.

L'aube 10 est en matériau composite. Sa fabrication comprend la formation d'une préforme fibreuse ayant une forme correspondant à celle de l'aube et la densification de la préforme par une matrice.

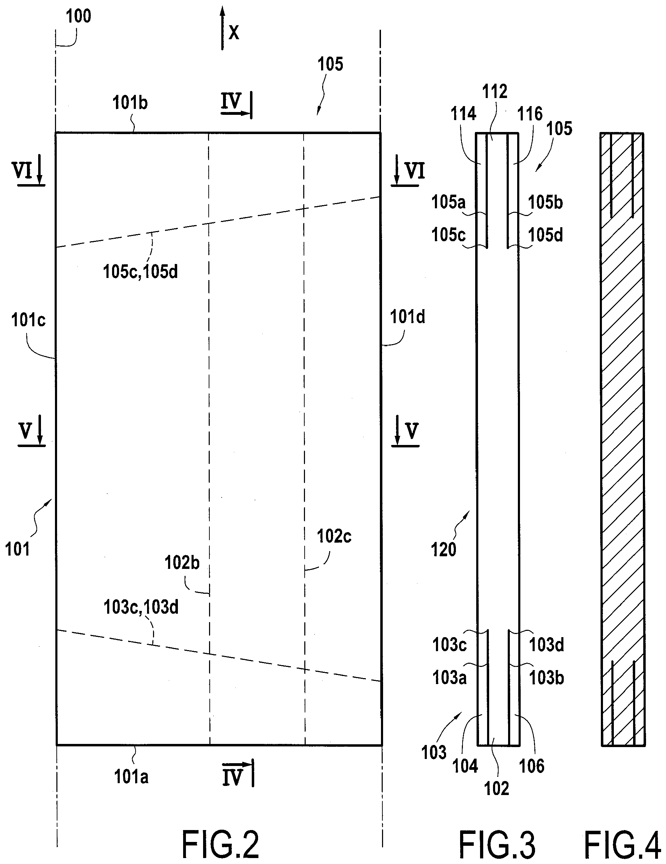

La figure 2 montre en plan une ébauche fibreuse 101 à partir de laquelle une préforme fibreuse de l'aube 10 peut être formée.

L'ébauche 101 est obtenue à partir d'une bande 100 tissée par tissage tridimensionnel (3D) ou multicouches, la bande 100 s'étendant de façon générale dans une direction X correspondant à la direction longitudinale de l'aube à fabriquer. Le tissage est réalisé par exemple avec des fils de chaîne s'étendant dans la direction X, étant noté qu'un tissage avec des fils de trame s'étendant dans cette direction est également possible. Une pluralité d'ébauches 101 peuvent être tissées l'une à la suite de l'autre dans la direction X. On peut aussi tisser simultanément plusieurs rangées parallèles d'ébauches 101.

Dans le mode de réalisation des figures 2 à 6, une ébauche 101 comprend, dans son épaisseur et à chacune de ses extrémités 101a et 101b, une première partie 102, 112, une deuxième partie 104, 114 et une troisième partie 106, 116. La partie 102 est située entre la partie 104 et la partie 106 et est liée aux parties 104 et 106 par tissage 3D dans une zone 120 destinée à former la pale de l'aube et déliée des parties 104 et 106 au niveau d'une zone de déliaison 103 comprenant une première déliaison 103a entre la partie 102 et la partie 104 et une deuxième déliaisons 103b, entre la partie 102 et la partie 106. Les déliaisons 103a, 103b s'étendent sur toute la largeur de l'ébauche 101 (dimension en sens trame) à partir de l'extrémité 101a de l'ébauche 101 jusqu'à des fonds de déliaison 103c et 103d. Les fonds de déliaison 103c et 103d s'étendent entre les bords longitudinaux 101c et 101d de l'ébauche 101 suivant une direction faisant un angle non nul par rapport à la direction trame afin de respecter l'orientation de la plate-forme intérieure 14.

La partie 112 est située entre la partie 114 et la partie 116 et est liée aux parties 114 et 116 par tissage 3D dans la zone 120 destinée à former la pale de l'aube et déliée des parties 114 et 116 au niveau d'une zone de déliaison 105 comprenant une première déliaison 105a entre la partie 112 et la partie 114 et une deuxième déliaisons 105b, entre la partie 112 et la partie 116. Les déliaisons 105a, 105b s'étendent sur toute la largeur de l'ébauche 101 à partir de l'extrémité 101b de l'ébauche 101 jusqu'à des fonds de déliaison 105c et 105d. Les fonds de déliaison 105c et 105d s'étendent entre les bords longitudinaux 101c et 101d de l'ébauche 101 suivant une direction faisant un angle non nul par rapport à la direction trame afin de respecter l'orientation de la plate-forme extérieure 16.

De façon bien connue, une déliaison est ménagée entre deux couches de fils de chaîne en omettant de faire passer un fil de trame à travers la zone de déliaison pour lier des fils de couches de chaîne situées de part et d'autre de la déliaison.

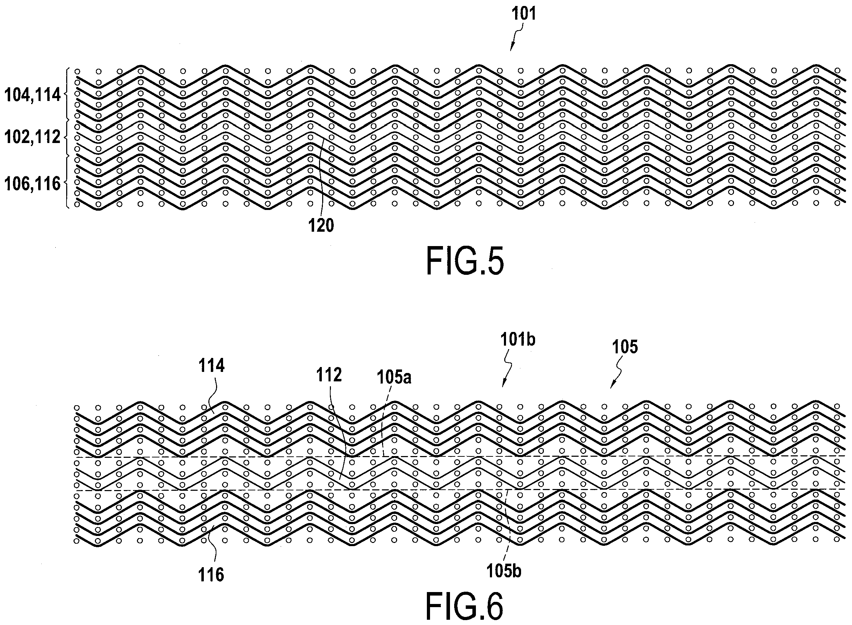

Les plans des figures 5 et 6 montrent un exemple de tissage 3D avec armure interlock et déliaisons 105a et 105b, les déliaisons 103a et 103b étant obtenues de la même façon que les déliaisons 105a et 105b. Sur la figure 6, les déliaisons sont représentées par des tirets. La partie 112 comprend une pluralité de couches de fils de chaîne (3 dans l'exemple illustré) qui sont liées par tissage 3D. Les parties 114 et 116 comprennent chacune une pluralité de couches de fils de chaîne (cinq dans l'exemple illustré) qui sont liées entre elles par tissage 3D. Entre la zone de déliaison 103 délimitée par les fonds de déliaison 103c et 103d et la zone de déliaison 105 délimitée par les fonds de déliaison 105c et 105d, les couches de fils de chaîne des parties 102, 112, 104, 114 et 106, 116 sont, dans l'exemple illustré, toutes liées entre elles (figure 5).

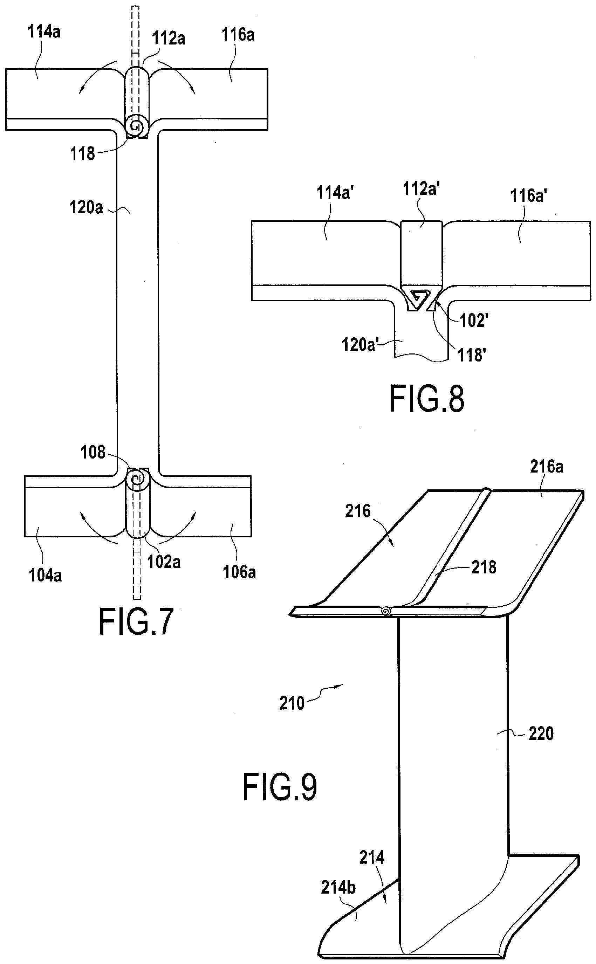

Après tissage, les segments 104a, 114a et 106a, 116a des parties 104, 106, 114, 116 non liées aux parties 102 et 112 sont dépliés ou déployés comme montré sur la figure 7 en vue de former des parties de préforme pour les plates-formes 14, 16, les segments 104a, 114a étant adjacents aux déliaisons 103a, 105a et les segments 106a, 116a étant adjacents aux déliaisons 103b, 105b. Les dépliages sont réalisés au niveau des fonds de déliaison.

Comme illustré sur la figure 7, le dépliage des segments 104a et 106a des parties 104, 106 entraîne la formation d'une rainure 108 entre les parties 104 et 106 au niveau de leur séparation dans l'ébauche 101, le segment 102a de la partie 102 s'étendant à partir du centre de la rainure 108. De même, le dépliage des segments 114a et 116a des parties 114, 116 entraîne la formation d'une rainure 118 entre les parties 114 et 116 au niveau de leur séparation dans l'ébauche 101, le segment 112a de la partie 112 s'étendant à partir du fond de la rainure 118.

Conformément à l'invention, la rainure 108 est comblée par rabattage sur lui même du segment 102a dans ladite rainure tandis que la rainure 118 est comblée par rabattage sur lui-même du segment 112a dans ladite rainure. Les segments 102a et 112a peuvent être rabattus de différentes façons. Ils peuvent par exemple être enroulés sur eux-mêmes dans les rainures correspondantes suivant un rayon croissant comme illustrée sur la figure 7 pour le segment 102 ou être enroulés sur eux-mêmes dans les rainures correspondantes suivant des portions rectilignes sensiblement parallèles au bords de la rainure comme illustrée sur la figure 8 pour un segment 112a' enroulée dans une rainure 118' présente entre des segments 114a' et 116a' dépliés.

Une préforme fibreuse de l'aube à fabriquer est ensuite réalisée par moulage au moyen d'un outillage de conformation avec déformations pour obtenir le profil de pale creuse désiré et les formes désirées pour les plates-formes. On obtient une préforme 210 (figure 9) avec une partie 220 de préforme pour la pale obtenue par mise en forme du segment 120a (figure 7), et des parties 214, 216 de préformes pour les plates-formes intérieure et extérieure obtenues par mise en forme des segments 104a, 106a, 114a et 116a. La partie centrale de la surface supérieure 216a de la partie de préforme 216 correspondant à l'emplacement de la rainure 118 est comblée par une partie de préforme 218 obtenue par la mise en forme du segment 112a comme décrit ci-avant. De même, la partie centrale de la surface inférieure de la partie de préforme 214 correspondant à l'emplacement de la rainure 108 est comblée par une partie de préforme obtenue par la mise en forme du segment 102a (non représenté sur la figure 9).

Une aube creuse en CMC telle que celle de la figure 1 peut être fabriquée de la façon suivante.

Une bande fibreuse 100 est tissée par tissage tridimensionnel, comprenant une pluralité d'ébauches fibreuses 101 orientées par exemple en sens chaîne, avec zones de déliaison, comme montré sur la figure 2. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'alumine Al₂O₃, en particulier pour des matériaux CMC de type oxyde/oxyde (fibres du renfort fibreux et matrice en oxyde réfractaire). On pourrait aussi utiliser des fils de carbone pour un matériau CMC à renfort fibreux en carbone.

De façon connue, la bande fibreuse peut être traitée pour éliminer l'ensimage présent sur les fibres et la présence d'oxyde à la surface des fibres.

Egalement de façon connue, une mince couche de revêtement d'interphase de défragilisation peut être ensuite formée sur les fibres de la bande fibreuse par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. Après séchage, les ébauches fibreuses individuelles sont découpées. Chaque ébauche est mise en forme (comme illustré par les figures 7 à 9) et placée dans un outillage pour conformation des parties de préforme de pale et de plates-formes intérieure et extérieure.

Ensuite, la résine est réticulée puis pyrolysée après avoir retiré la préforme de l'outillage de conformation pour obtenir une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation peut être formée par CVI, par exemple en PyC, BN ou BC. La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice autocicatrisante comprenant des phases de matrice en carbone pyrolytique PyC, en carbure de bore B4C ou en système ternaire Si-B-C comme décrit notamment dans les documents US 5 246 756 et US 5 965 266. D'autres types de matrice céramique peuvent être envisagés, notamment des matrices en oxyde réfractaire, par exemple en alumine, en particulier pour des matériaux CMC de type oxyde/oxyde.

La densification est de préférence réalisée en deux étapes séparées par une étape d'usinage de l'aube à ses dimensions désirées notamment pour obtenir la forme finale désirée pour les plates-formes 14, 16 et éventuellement pour obtenir le profil désiré de la pale 12.

L'aube peut être également fabriquée en matériau composite à matrice organique CMO (thermoplastique ou thermodurcissable avec préforme fibreuse de tout type). Dans ce cas, la densification de la préforme fibreuse obtenue de façon connue en soi suivant le procédé par voie liquide.

Le procédé par voie liquide consiste à imprégner la préforme fibreuse par une résine. La préforme est placée dans un moule pouvant être fermé de manière étanche avec un logement ayant la forme de la pièce finale moulée. Ensuite, on injecte la résine, par exemple une résine thermoplastique ou thermodurcissable, dans tout le logement pour imprégner toute la partie fibreuse de la préforme.

La polymérisation est réalisée par un traitement thermique (généralement par chauffage du moule). La préforme étant toujours maintenue dans le moule, elle a une forme correspondant à celle de la pièce à réaliser. La matrice organique peut être notamment obtenue à partir de résines époxydes.

Dans le mode de réalisation décrit ci-avant, les premières parties 102, 112, les deuxièmes parties 104, 114 et les troisième parties 106, 116 comprennent ensemble le même nombre de couches de fils de chaîne que le reste de l'ébauche fibreuse 101 située en dehors des zones de déliaison 103 et 105, à savoir au niveau de la zone 120. Dans l'exemple illustré sur les figures 5 et 6, les deuxième et troisième parties 114 et 116 comprennent chacune 5 couches de fils des chaîne tandis que la première partie 112 comprend 3 couches de fils de chaîne. Il en est de même pour les première, deuxième et troisième parties 102, 104 et 106 non représentées sur les figures 5 et 6.

Selon un autre mode de réalisation de l'invention, les première, deuxième et troisième parties comprennent ensemble un nombre de couches de fils de chaîne supérieur au nombre de couche de fils de chaîne présents dans le reste de l'ébauche fibreuse située en dehors des zones de déliaison de l'ébauche fibreuse. Dans ce cas, une ou plusieurs couches de fils de chaîne supplémentaires sont tissées avec les couches de fils de chaîne d'au moins les deuxième et troisième parties.

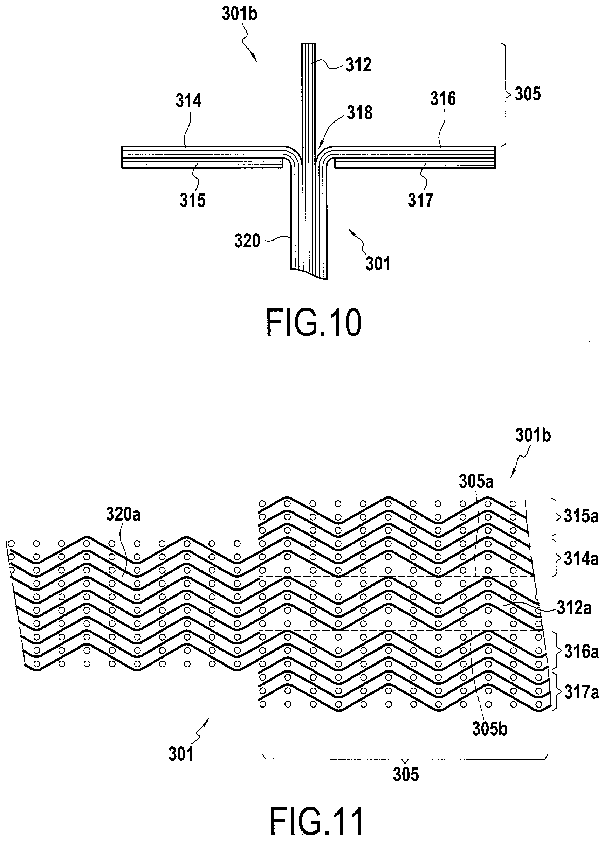

Les figures 10 et 11 montrent une extrémité 301b d'une ébauche fibreuse 301 qui diffère de l'extrémité 101b de l'ébauche fibreuse 101 déjà décrite et illustrée dans les figures 6 et 7 en ce que des couches supplémentaires de fils de chaîne ont été tissées avec les deuxième et troisième parties 314 et 316 destinées à former la plateforme extérieure de l'aube. Plus précisément, dans la zone de déliaison 305, un pli 315 comprenant 3 couches de fils de chaîne supplémentaire a été tissé avec la deuxième partie 314 à partir du début de la déliaison 305a séparant la première partie 312 de la deuxième partie 314 tandis qu'un pli 317 comprenant 3 couches de fils de chaîne supplémentaire a été tissé avec la troisième partie 316 à partir du début de la déliaison 305b séparant la première partie 312 de la troisième partie 316. Comme déjà décrit précédemment pour la partie 112 de l'ébauche 101, la première partie 312 est destinée à être repliée sur elle-même afin de combler la rainure 318 formée entre les segments dépliés des parties 314 et 316. L'ébauche 301 comporte ainsi, dans la zone de déliaison 305, des première, deuxième et troisième parties 312, 314 et 316 qui comprennent ensemble un nombre de couches de fils de chaîne supérieur au nombre de couche de fils de chaîne présents dans une zone 120 située en dehors des zones de déliaison de l'ébauche fibreuse

Selon encore un autre mode de réalisation de l'invention, les première, deuxième et troisième parties comprennent ensemble un nombre de couches de fils de chaîne inférieur au nombre de couche de fils de chaîne présents dans le reste de l'ébauche fibreuse située en dehors des zones de déliaison de l'ébauche fibreuse. Dans ce cas, une ou plusieurs couches de fils de chaîne sont retirées, c'est-à-dire non tissées et extraites de l'ébauche, au niveau des zones de déliaison de l'ébauche.

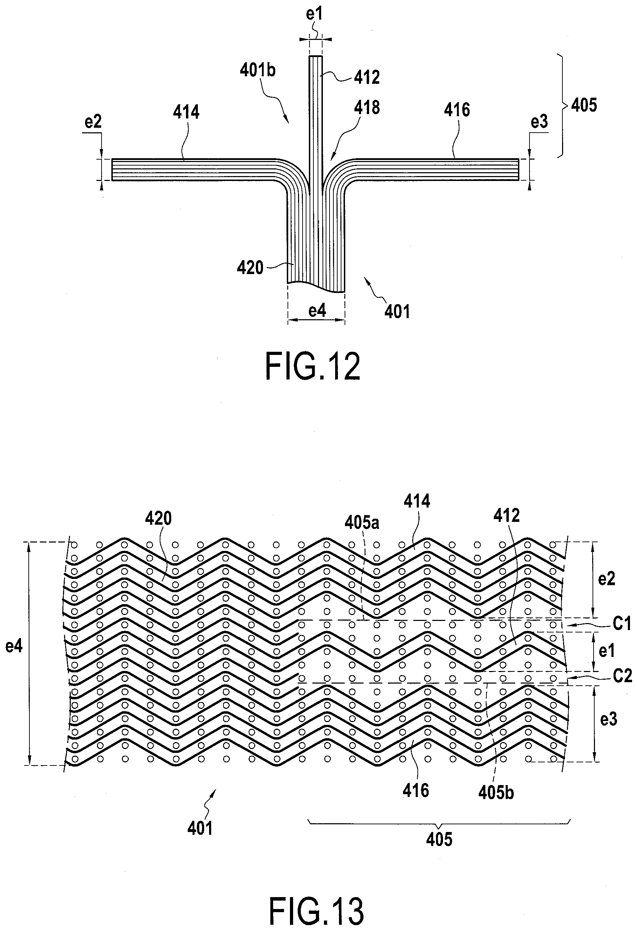

Les figures 12 et 13 montrent une extrémité 401b d'une ébauche fibreuse 401 qui diffère de l'extrémité 101b de l'ébauche fibreuse 101 déjà décrite et illustrée dans les figures 6 et 7 en ce que des couches de fils de chaîne ont été retirées dans une zone de déliaison 405 comprenant une déliaison 405a séparant la première partie 412 de la deuxième partie 414 et une déliaison 405b séparant la première partie 412 de la troisième partie 416, les deuxième et troisième parties 414 et 416 étant destinées à former la plateforme extérieure de l'aube. Plus précisément, dès le début de la zone de déliaison 405, les deux couches de fils de chaîne C1 et C2 ne sont plus tissées avec les couches de fils de chaîne utilisées pour former la première partie 412 (figure 13). Les couches C1 et C2 peuvent être ainsi retirées dans la zone de déliaison 405 si bien que la première partie 412 ne comprend que 3 couches de fils de chaîne tandis que les deuxième et troisième parties 414 et 416 comprennent chacune 6 couches de fils de chaîne. Le cumul des épaisseurs cumulées e1, e2 et e3 respectivement des première, deuxième et troisième parties 412, 414 et 416 est inférieur à l'épaisseur e4 de la partie 420 de l'ébauche destinée à former la partie de préforme de pale de l'aube. Comme déjà décrit précédemment pour le segment 112a de l'ébauche 101, la première partie 412 est destinée à être repliée sur elle-même afin de combler la rainure 418 formée entre les segments dépliés des deuxième et troisième parties 414 et 416.

Le procédé de l'invention a été décrit ci-avant en relation avec la fabrication d'une aube fixe directrice de sortie (OGV pour « *Outlet Guide Vane* ») d'un redresseur de turbomachine. Toutefois, le procédé de l'invention s'applique notamment à la fabrication de toute pièce aéronautique comprenant un corps et au moins une plateforme intégrée. Le procédé de l'invention peut notamment être utilisé pour la fabrication d'aubes mobiles de turbomachine, de raidisseurs et de ferrures.

## Revendications

1. Procédé de fabrication d'une pièce (10) en matériau composite ayant un corps solidaire (12) d'au moins une plate-forme (14 ; 16) présente à une extrémité dudit corps, le procédé comportant :
- la formation par tissage multicouches entre une pluralité de couches de fils de chaîne d'une ébauche fibreuse (101) ayant une direction longitudinale correspondant à celle du corps (12) de la pièce (10) à réaliser, l'ébauche fibreuse étant séparée dans son épaisseur en des première, deuxième et troisième parties (102, 104, 106 ; 112, 114, 116) dans au moins une zone de déliaison (103 ; 105) voisine d'une de ses extrémités, la première partie (102 ; 112) étant située entre la deuxième partie et la troisième partie (104, 106 ; 114, 116) auxquelles elle est reliée par tissage en dehors de ladite au moins une zone de déliaison (103 ; 105),
- la formation, à partir de l'ébauche fibreuse (101), d'une préforme de la pièce à réaliser, par dépliage, de part et d'autre de la première partie, de segments (104a ; 114a) de la deuxième partie et de la troisième partie (106a ; 116a) non liés à la première partie, par mise en forme du segment (104a ; 114a) déplié de la deuxième partie et du segment (106a ; 116a) déplié de la troisième partie pour former des parties de préforme pour une plate-forme (14 ; 16) de la pièce à fabriquer (10), et par rabattage sur lui-même du segment (102a ; 112a) de la première partie pour combler une rainure (108 ; 118) présente au niveau de la portion de séparation entre les deuxième et troisième parties (104, 106 ; 114, 116),
- la densification de la préforme par une matrice pour obtenir une pièce (10) en matériau composite ayant au moins une plate-forme intégrée (14 ; 16).

2. Procédé selon la revendication 1, **caractérisé en ce que** les première, deuxième et troisième parties (102, 104, 106 ; 112, 114, 116) comprennent ensemble le même nombre de couches de fils de chaîne que le reste (120) de l'ébauche fibreuse (101) située en dehors de ladite au moins une zone de déliaison (103 ; 105).

3. Procédé selon la revendication 1, **caractérisé en ce que** les première, deuxième et troisième parties (312, 314, 316) comprennent ensemble un nombre de couches de fils de chaîne supérieur au nombre de couche de fils de chaîne présents dans le reste (320) de l'ébauche fibreuse (301) située en dehors de ladite au moins une zone de déliaison (305).

4. Procédé selon la revendication 3, **caractérisé en ce qu'**une ou plusieurs couches de fils de chaîne supplémentaires sont tissées avec les couches de fils de chaîne d'au moins les deuxième et troisième parties (314, 316).

5. Procédé selon la revendication 1, **caractérisé en ce que** les première, deuxième et troisième parties (412, 414, 416) comprennent ensemble un nombre de couches de fils de chaîne inférieur au nombre de couches fils de chaîne présents dans le reste (420) de l'ébauche fibreuse (401) située en dehors de ladite au moins une zone de déliaison (405).

6. Procédé selon la revendication 5, **caractérisé en ce qu'**une ou plusieurs couches de fils de chaîne sont retirées lors du tissage desdites au moins deuxième et troisième parties (414, 416).

7. Procédé selon l'une quelconque des revendications 1 à 6, **caractérisé en ce que** la pièce en matériau composite correspond à une pièce aéronautique choisit par au moins une des pièces suivantes : aube fixe de turbomachine, aube mobile de turbomachine, raidisseur et ferrure.

## Patentansprüche

1. Verfahren zur Herstellung eines Teils (10) aus Verbundwerkstoff mit einem Körper (12), der mit wenigstens einer Plattform (14; 16), die an einem Ende des Körpers vorhanden ist, fest verbunden ist, wobei das Verfahren umfasst:
- das Ausbilden eines Faserrohlings (101), welcher eine Längsrichtung aufweist, die derjenigen des Körpers (12) des herzustellenden Teils (10) entspricht, durch Mehrlagenweben zwischen einer Vielzahl von Kettfadenlagen, wobei der Faserrohling in wenigstens einem zu einem seiner Enden benachbarten Losbindungsbereich (103; 105) in seiner Dicke in einen ersten, einen zweiten und einen dritten Teil (102, 104, 106; 112, 114, 116) geteilt ist, wobei der erste Teil (102; 112) zwischen dem zweiten Teil und dem dritten Teil (104, 106; 114, 116) gelegen ist, mit denen er außerhalb des wenigstens einen Losbindungsbereichs (103; 105) durch Weben verbunden ist,
- Ausbilden eines Vorformlings des herzustellenden Teils aus dem Faserrohling (101), indem auf beiden Seiten des ersten Teils nicht mit dem ersten Teil verbundene Segmente (104a; 114a) des zweiten Teils und des dritten Teils (106a; 116a) aufgefaltet werden, das aufgefaltete Segment (104a; 114a) des zweiten Teils und das aufgefaltete Segment (106a; 116a) des dritten Teils in Form gebracht werden, um Vorformlingteile für eine Plattform (14; 16) des herzustellenden Teils (10) zu bilden, und das Segment (102a; 112a) des ersten Teils auf sich selbst umgeschlagen wird, um eine Nut (108; 118), die im Bereich des Trennabschnitts zwischen dem zweiten und dem dritten Teil (104, 106; 114, 116) vorhanden ist, auszufüllen,
- das Verdichten des Vorformlings durch eine Matrix, um ein Teil (10) aus Verbundwerkstoff mit wenigstens einer integrierten Plattform (14; 16) zu erhalten.

2. Verfahren nach Anspruch 1, **dadurch gekennzeichnet, dass** der erste, der zweite und der dritte Teil (102, 104, 106; 112, 114, 116) zusammen die gleiche Anzahl an Kettfadenlagen wie der Rest (120) des Faserrohlings (101), welcher außerhalb des wenigstens einen Losbindungsbereichs (103; 105) gelegen ist, umfassen.

3. Verfahren nach Anspruch 1, **dadurch gekennzeichnet, dass** der erste, der zweite und der dritte Teil (312, 314, 316) zusammen eine Anzahl an Kettfadenlagen aufweisen, die größer als die Anzahl an Kettfadenlagen ist, welche im Rest (320) des Faserrohlings (301), der außerhalb des wenigstens einen Losbindungsbereichs (305) gelegen ist, vorhanden sind.

4. Verfahren nach Anspruch 3, **dadurch gekennzeichnet, dass** eine oder mehrere zusätzliche Kettfadenlagen mit den Kettfadenlagen von wenigstens dem zweiten und dem dritten Teil (314, 316) verwoben werden.

5. Verfahren nach Anspruch 1, **dadurch gekennzeichnet, dass** der erste, der zweite und der dritte Teil (412, 414, 416) zusammen eine Anzahl an Kettfadenlagen aufweisen, die kleiner als die Anzahl an Kettfadenlagen ist, welche im Rest (420) des Faserrohlings (401), der außerhalb des wenigstens einen Losbindungsbereichs (405) gelegen ist, vorhanden sind.

6. Verfahren nach Anspruch 5, **dadurch gekennzeichnet, dass** eine oder mehrere Kettfadenlagen während des Webens der wenigstens zweiten und dritten Teile (414, 416) entfernt werden.

7. Verfahren nach einem der Ansprüche 1 bis 6, **dadurch gekennzeichnet, dass** das Verbundwerkstoffteil einem Luftfahrtteil entspricht, das aus wenigstens einem der folgenden Teile ausgewählt ist: Leitschaufel einer Turbomaschine, Laufschaufel einer Turbomaschine, Versteifung und Beschlagteile.

## Claims

1. A method of fabricating a composite material part (10) having a body (12) secured to at least one platform (14; 16) present at one end of said body, the method comprising:
- using multilayer weaving between a plurality of layers of warp yarns to form a fiber blank (101) having a longitudinal direction corresponding to the longitudinal direction of the body (12) of the part (10) that is to be made, the fiber blank being separated in its thickness direction into first, second, and third portions (102, 104, 106; 112, 114, 116) in at least one zone of non-interlinking (103; 105) adjacent to one of its ends, the first portion (102; 112) being situated between the second and third portions (104, 106; 114, 116), to which it is connected by weaving outside said at least one zone of non-interlinking (103; 105);
- using the fiber blank (101) to form a preform for the part that is to be made by folding out segments (104a, 106a; 114a, 116a) of the second and third portions that are not interlinked with the first portion on opposite sides of the first portion, by shaping the folded-out segments (104a, 106a; 114a, 116a) of the second and third portions to form preform portions for a platform (14; 16) of the part (10) to be fabricated, and by folding down the segment (102; 112a) of the first portion in order to fill in the groove (108; 118) present in the gap between the second and third portions (104, 106; 114, 116); and
- densifying the preform with a matrix in order to obtain a part (10) made of composite material having at least one integrated platform (14; 16).

2. A method according to claim 1, **characterized in that** the first, second, and third portions (102, 104, 106; 112, 114, 116) together have the same number of layers of warp yarns as the remainder (120) of the fiber blank (101) situated outside said at least one zone of non-interlinking (103; 105).

3. A method according to claim 1, **characterized in that** the first, second, and third portions (312, 314, 316) together comprise a number of warp yarn layers that is greater than the number of warp yarn layers present in the remainder (320) of the fiber blank (301) situated outside said at least one zone of non-interlinking (305).

4. A method according to claim 3, **characterized in that** one or more additional layers of warp layers are woven together with the layers of warp yarns of at least the second and third portions (314, 316).

5. A method according to claim 1, **characterized in that** the first, second, and third portions (412, 414, 416) together comprise a number of warp yarn layers that is less than the number of warp yarn layers present in the remainder (420) of the fiber blank (401) situated outside said at least one zone of non-interlinking (405).

6. A method according to claim 5, **characterized in that** one or more layers of warp layers are withdrawn during the weaving at least of said second and third portions (414, 416).

7. A method according to any one of claims 1 to 6, **characterized in that** the composite material part corresponds to an aviation part selected from at least one of the following parts: a turbine engine vane, a turbine engine blade, a stiffener, and a fitting.
